# EUROPEAN PATENT SPECIFICATION

(11) **EP 2 295 891 B1**
(45) Date of publication and mention of the grant of the patent: **10.09.2014**
(21) Application number: 09166931.7
(22) Date of filing: 31.07.2009
(51) Int. Cl.: F24J 2/04

(54) **Rooftile heat exchange system**
Dachpfannen-Wärmetauschersystem
Système d'échange thermique de tuiles

(43) Date of publication of application: 16.03.2011
(73) Proprietor: MMD Designconsultants, 6226 BA Maastricht (NL)
(72) Inventor: Meijers, Marcus, 6226 BA, Maastricht (NL)
(74) Representative: DeltaPatents B.V.

(56) References cited:
- WO-A-02/31415
- DE-A1- 3 026 217
- DE-A1- 3 218 013

## Description

The invention relates to a construction for exchanging heat between a roof tile and a fluid in a conduit. The invention further relates to a roof tile heat exchange system, a method of providing a roof comprising a heat exchange system, and a method of upgrading an existing roof.

### Background of the invention

DE 3026217 A1 discloses a construction for heating a liquid by using the heat of a roof tile when radiated by the sun. The construction is mounted at the underside of the roof tiles. In one embodiment, a thermal conductive metal sheet fixes the pipes through which the liquid flows to the underside of the roof tiles. This construction has the drawback that the process of adding the construction to the roof is cumbersome.

DE-3218013 A1 discloses a highly thermally conductive metal roof batten for obtaining heat energy for heating purposes and/or hot-water production. The batten is made broad-faced on its side facing the roof-tile underside and is connected, via a bent portion extending downwards approximately at right angles to its face, to a pre-perforated nailing-on web which is parallel to it, and is provided, on one of its faces, with a pipe fitting snugly on it and intended for the conduction of heat-absorbing liquid.

### Summary of the invention

It is an object of the invention to provide a construction for exchanging heat between a roof tile and a fluid in a conduit in an ease manner.

The object of the invention is achieved in a first aspect by providing construction for exchanging heat between a roof tile and a fluid as claimed in claim 1, in a second aspect of the invention by providing a roof tile heat exchange system as claimed in claim 10 and in a third aspect of the invention by providing a method of providing a roof comprising a heat exchange system as claimed in claim 11. A fourth aspect of the invention provides a method of upgrading an existing roof as claimed in claim 12. Advantageous embodiments are defined in the dependent claims.

The construction in accordance with the first aspect of the invention is shaped such that: the construction is fixed with respect the tile batten, the conduit is mountable in the construction to fix a position of the conduit with respect to the the batten, and that a thermal contact between the conduit and a roof tile is established. The construction has an elastic portion to obtain a press fit contact between the conduit and the roof tile when, in use, the construction is mounted and the roof tile is fitted to the roof. Such a construction enables to first mount it to, for example, the tile batten. The conduits may be fitted to the construction when the construction is mounted to the tile batten, or the conduits may be fitted to the construction after the construction has been mounted to the tile batten. The last step is to mount the roof tiles. Because now the connection between the roof tiles is established by the fact that the construction has an elastic portion, it is not required to fit the conduits first to the roof tiles before the roof tiles are mounted on the roof. Consequently, the process of mounting the roof tiles is very simple because it is the same as usual for roofs without the construction for exchanging heat.

The conduit may be any hollow and fluid tight construction, such as for example a pipe. The cross section of the conduit may have any suitable shape, such as for example circular or rectangular. Usually, the fluid flows through the conduit to transport the exchanged heat. The heat exchange may comprise transport of the heat from the roof tile to the fluid to heat the fluid. The heated fluid may be used to provide warm water or for other heating purposes. Alternatively, the fluid may be used to cool the roof tile and to transport the heat away from the roof, preferably to outside the building. In the latter situation, the fluid may be cooled to cool the roof tile.

The tile batten may be a standard tile batten as used in roofs without any heat exchange system. The construction may be fixed with respect to the tile batten in any manner, for example, the construction may be mounted on the tile batten by using nails, screws, staples or glue. Alternatively, an end of the construction may have a shape corresponding to the shape of the tile batten to at least partly surround the top of the tile batten such that the construction when the end is put over the top of the tile batten is kept in place against the gravity force.

In another embodiment of DE 3026217 A1, the tile battens are hollow to provide the pipes through which the liquid flows. This construction has the drawback that it required special non-wooden tile battens which cannot be handled in the same manner as the usual wooden tile battens. A further drawback is that in existing roofs the existing tile battens have to be replaced which is an expensive operation.

In an embodiment, the construction is shaped to mount the conduit in an area between successive tile battens when, in use, the construction is fixed with respect to the tile batten. Thus, the conduit is arranged in the free space below the roof tiles. The press fit is obtained by deforming the elastic portion by a weight of the roof tile when fitted.

In an embodiment, the construction is shaped to hold the conduit at a lower part thereof and at a side directed towards the tile batten to which the construction is mounted. The lower part of the conduit is the side of the conduit directed away from the roof tile. This shape of the construction prevents movement of the conduit in the direction towards the tile batten and away from the roof tile.

In an embodiment, the construction has an elastic portion which has a first end which makes thermal contact with the roof tile and a second end which exerts a force on the conduit thereby providing a thermal contact with the conduit. It is not essential that the whole portion between the first end and the second and is elastic. The force exerted being counteracted by the shape of the construction which prevents movement of the conduit in the direction towards the tile batten and away from the roof tile. The advantage of this construction is that the thermal contact is obtained by a press fit caused by the weight of the roof tile. No separate pressing means are required to ensure a good thermal contact between the roof tile and the conduit. A further advantage is that there is no fixed connection between the roof tile and the conduit. This has the advantage that the roof tile can be mounted to the roof in a separate step.

In an embodiment, the construction has an extending portion extending, in use, to a top of the tile batten to fasten the construction to the tile batten, the top of the tile batten being the side of the tile batten directed towards the roof tile when present. This enables an easy fastening of the construction to the tile batten. For example by stapling the extending portion to the top of the tile batten. Alternatively, the extending portion may be cup shaped to fit over the top of the tile batten. Such a construction has the advantage that the construction need not be fastened to the tile batten because in stays in place of its own. However, also this cup shaped extending portion may be additionally fastened to the tile batten in any manner.

In an embodiment, the construction comprises a first part which is constructed to be mounted to the tile batten to hold both the conduit and a second part which is at least partly resilient. The second part extends between the roof tile and the conduit to obtain the press fit contact to transfer the heat between the roof tile and the conduit. Such a two part construction has several advantages. A first advantage is that it becomes easier to add the heat exchange system to the roof. First, the first part is mounted to the tile batten in any of the already discussed manners. Secondly, the conduit is pressed or put in a receptacle of the first part such that the first part holds the conduit. Thirdly, the second part is connected to the first part such that when in the last step the roof tile is placed, the second part, which is thermally conductive, presses against the conduit. The first part is constructed to substantially hold the conduit in position against the pressure exerted by the second part of the conduit. However, it is not essential that the second part is inflexible, it should not be so flexible that the second part is not able to make a press fit in-between the roof tile and the conduit. A second advantage is that the material of the first and second part may be different to optimally suit its function. For example, the second part is made of a plastic and the first part is made of a metal. Preferably, the metal is of light weight and has a good thermal conductivity, such as for example aluminum, to minimize the extra load on an existing roof.

In an embodiment, the first part has a lower thermal conductivity than the second part. This has the advantage that the heat transfer from the roof tile to the conduit is predominantly performed by the second part thereby obtaining a desired temperature gradient distribution over and in the roof tile. A further advantage is that the relatively low thermal conductivity of the first part when present between the roof tile and the tile batten decreases the loss of heat towards the tile batten.

In an embodiment, the second part is shaped for contacting the roof tile in its central area. In this manner the temperature gradient distribution over the roof tile is optimal while the dimensions of the second part are minimal. Preferably, the second part is sheet shaped and the contact area between the second part and the roof tile is line shaped and is dividing the active surface of the roof tile in two halves. With active surface is meant the surface of the roof tile being illuminated by the sun light, thus not taking into account the part being covered by other roof tiles.

In an embodiment, the construction further comprises the conduit.

In an embodiment, the construction further comprises the roof tile which has a thermal conductive sheet, layer or coating at its underside. The underside is the side directed towards the tile batten when the roof tile is placed on the roof.

These and other aspects of the invention are apparent from and will be elucidated with reference to the embodiments described hereinafter.

### Brief description of the drawings

In the drawings:
Fig. 1 schematically shows a roof with a heat exchange system,
Fig. 2 schematically shows a cross section of a two part construction for exchanging heat between a roof tile and a fluid in a conduit, and
Fig. 3 schematically shows an embodiment of the one part of the two parts of the construction which provides the thermal connection between the roof tile and the conduit in an elastic manner.

It should be noted that items which have the same reference numbers in different Figures, have the same structural features and the same functions, or are the same signals. Where the function and/or structure of such an item has been explained, there is no necessity for repeated explanation thereof in the detailed description.

### Detailed description

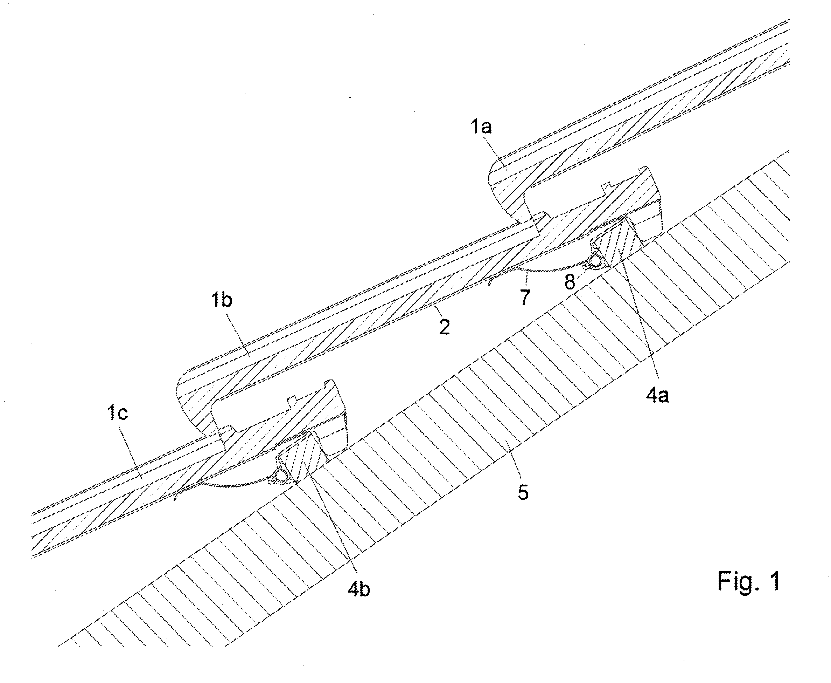

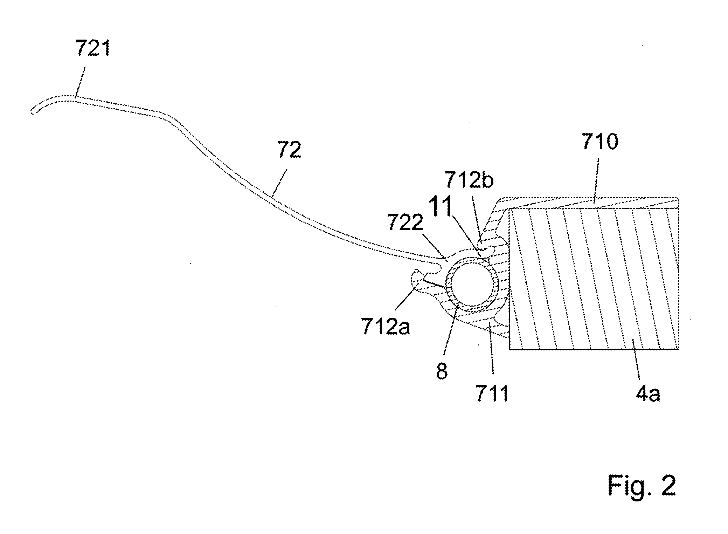

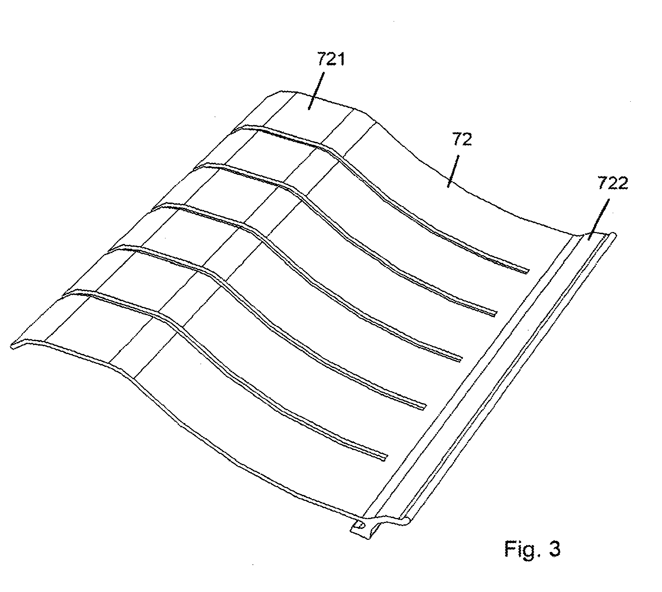

Fig. 1 schematically shows a roof with a heat exchange system. The roof comprises tile battens 4a, 4b which are mounted on a rafter 5. The construction 7 is mounted to the tile batten 4a, holds the conduit 8 and has an elastic portion to obtain a press fit contact between the conduit 8 and the roof tile 1b. Neighboring roof tiles are indicated by 1a and 1c. The heat transferring and fixing construction 7 is explained in more detail with respect to Figures 2 and 3.

The construction 7 can be added to an existing roof by first removing the existing roof tiles. Next, the construction 7 together with the conduit 8 is attached to the tile batten 4a. Alternatively, the conduit 8 may be attached to the construction 7 after the construction 7 has been attached to the tile batten 4a. Instead of attaching the construction 7 to the tile batten 4a, the construction 7 may be attached to another suitable beam of the roof construction. As a last step, the roof tiles are placed. Due to the fact that the portion or part of the construction 7 between the conduit 8 and the roof tile 1b is at least partly elastic, the weight of the roof tile 1b presses this portion or part of the construction 7 towards the rafter 5 and thus also results in a press fit contact of this portion or part with both the roof tile 1b and the conduit 8. In this manner, the thermal contact between the construction 7 and the roof tile 1b and the thermal contact between the construction 7 and the conduit 8 is obtained by pressing the parts against each other, which results in a very good thermal contact. Another advantage of the elasticity is that can be accommodated for tolerance on the dimensions of the tile battens and the roof tiles, and for different angles of the roof.

In an embodiment, a thermal conductive sheet or layer 2 may be attached or provided to the underside of the roof tile 1b at least in the area where the construction 7 contacts the roof tile 1b. The layer 2 may be a metal sheet or a metal coating. In an embodiment, the construction 7 contacts the roof tile 1b in its center area. The center area may be a line shaped area.

Fig. 2 schematically shows a cross section of a two part construction for exchanging heat between a roof tile and a fluid in a conduit. The construction 7 has a first part 71 which in an embodiment is made from plastic and a second part 72 which in an embodiment is made from metal. What counts is that the part 72 is thermal conductive and is, at least partly, flexible or of resilient material, and that the part 71 is sufficiently stiff such that the press fit of the part 72 with the roof tile 1b and the conduit 8 is supported. If the part 72 is from metal its shape or thickness should be selected, at least locally, such that it is at least partly flexible to enable bending when the roof tile 1b associated with the part 72 is put in place.

Part 71 has a portion 710 with which part 71 is fitted to the tile batten 4a. In the embodiment shown, portion 710 is cup-shaped to be put on top of the tile batten 4a. The portion 710 may be put over the top of the tile batten 4a without being fastened by stapling, screwing, nailing or gluing. Alternatively, the portion 710 may have any suitable shape such that it can be fastened to the top and/or side of the tile batten 4a. Part 71, has a portion 711 partly surrounding the conduit 8. The portion 711 is arranged to keep the conduit in position when placed in the part 71 such that it does not fall out when the part 71 is fitted to the tile batten 4a. The portion 711 may have some resilience to tightly hold the conduit 8 in position. Further, the part 71 is shaped to hold the part 72 in place. In the embodiment shown, the part 71 comprises the portions 712a and 712b to hold the part 72 in position once mounted.

In an embodiment of the part 72, the flexible part 721 is provided at the end of part 72 contacting the roof tile 1b. The other end 722 of part 72, which cooperates with the portions 712a and 712b of part 71, are shaped to keep the part 72 in place with respect to the part 71 when mounted therein. This is advantageous when assembling the construction. First, part 71, with or without the conduit 8 is fastened to the tile batten 4a. If not yet present, then the conduit 8 is put in the portion 711. Next, the part 72 is pressed towards the conduit 8 and is kept in place behind the portions 712a and 712b. Finally, the roof tile 1b is put on the roof thereby pressing by its weight on the portion 721. The pressure on the portion 721 presses the part 72 with its end 722 against the conduit 8. The part 71 is shaped to, at least for a part, withstand this pressure on the conduit 8. An embodiment of the part 72 is shown in more detail with respect to Fig. 3.

In an embodiment, the thermal conductivity of the part 71 is lower than the thermal conductivity of the part 72. A relatively low conductivity of the part 71 prevents the heat of the roof tile 1b to leak away via the tile batten 4a. This is especially true if the part 71 is of a material which is a thermal isolator. Another advantage is that the temperature gradients in the tile towards the contact point (or line or area) with the roof tile 1b is more homogenous across the roof tile 1b.

Fig. 3 schematically shows an embodiment of the one part of the two parts of the construction which provides the thermal connection between the roof tile and the conduit in an elastic manner. The metal part 72 has the portion 722 shaped for cooperation with the conduit 8 to establish the thermal contact between the part 72 and the conduit 8. The portion 722 is further shaped to cooperate with the portions 712a and 712b of the part 71 such that the part 72 is kept in position with respect to the part 71 and the conduit 8. The desired flexibility of the flexible part 721 may be obtained by providing grooves or slots extending in the direction from one end to the other end of the part 72. In addition or alternatively, the thickness of the metal may decrease towards the end of part 72 contacting the roof tile 1b.

It should be noted that the above-mentioned embodiments illustrate rather than limit the invention, and that those skilled in the art will be able to design many alternative embodiments without departing from the scope of the appended claims.

For example, the conduit 8 may be a pipe or any other hollow and fluid tight construction allowing the fluid to be transported to a place where the heat can be withdrawn or added. The material of the conduit should be thermally conductive.

Although in the embodiments, the construction 7 is mounted to the tile batten, alternatively, the construction 7 may be mounted to any other suitable beam in the roof construction.

The construction 7 which transfers the heat from the roof tile 1b to the conduit 8 and which fixes the conduit 8 with respect to the tile batten 4a may be added to existing roofs or may be implemented in new roofs. Such a roof provided with the construction 7 acts as a heat exchange system. For example, the energy of the sun which heats the roof tile 1b is transported to the fluid in the conduit 8 and may be used or may be disposed of elsewhere. Alternatively, the fluid may be cooled to cool the roof tile 1b. It is possible to remove the heat transport system from an existing roof and to reuse it in another roof.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A construction (7) for fixing a conduit (8) with respect to a tile batten (4a; 4b) and for providing a thermal contact between the conduit (8) and a roof tile (1b) for exchanging heat between the roof tile (1b) and a fluid in the conduit (8), the construction (7) having an elastic portion (72; 721) to obtain a press fit contact between the conduit (8) and the roof tile (1b) when the roof tile (1b) is fitted, **characterized in that**:
the construction (7) is shaped to establish a mount for positioning the conduit (8) in an area between successive tile battens (4a, 4b), and
the elastic portion (72; 721) of the construction (7) is deformable by a weight of the roof tile (1b) when fitted so as to obtain said press fit contact.

2. A construction (7) as claimed in claim 1, being mounted to the tile batten (4a) and being shaped for holding the conduit (8) at its lower part being a side of the conduit (8) directed away from the roof tile (1b) and at a side being directed towards the tile batten (4a) to which the construction (7) is mounted in use, to prevent, in use, movement of the conduit (8) in the direction towards the tile batten (4a) and away from the roof tile (1b).

3. A construction (7) as claimed in claim 1, wherein the elastic portion (72; 721) has a first end making thermal contact with the roof tile (1b) in use and a second end for exerting a force on the conduit (8) when present thereby providing a thermal contact with the conduit (8), the force being counteracted by a shape of the construction (7) preventing movement of the conduit (8) in the direction towards the tile batten (4a) and away from the roof tile (1b).

4. A construction (7) as claimed in claim 1, wherein the construction (7) has a portion (710) extending, in use, to a top of the tile batten (4a) to mount the construction (7) to the tile batten (4a), the top of the tile batten (4a) being the side of the tile batten (4a) directed towards the roof tile (1b) when present.

5. A construction as claimed in claim 1 comprising a first part (710, 711) being constructed for being fixed with respect to the tile batten (4a), for holding the conduit (8), and for holding a second part (72) being at least partly resilient and, in use, extending between the roof tile (1b) and the conduit (8) to obtain the press fit contact for transferring the heat between the roof tile (1b) and the conduit (8).

6. A construction as claimed in claim 6, wherein the first part (710, 711) has a lower thermal conductivity than the second part (72).

7. A construction as claimed in claim 6, wherein the second part (72) is shaped for contacting the roof tile (1b) in its central area.

8. A construction as claimed in any one of the claims 1 to 7, further comprising the conduit (8).

9. A construction as claimed in any one of the claims 1 to 7, further comprising a roof tile (1b) with a thermal conductive sheet, layer or coating (2) at its side directed towards the tile batten (4a) when mounted.

10. A roof tile heat exchange system comprising:
a tile batten (4a),
a conduit (8),
a roof tile (1b), and
a construction (7) as claimed in claim 1 being fixed with respect to the tile batten (4a) for providing a press fit contact between the conduit (8) and the roof tile (1b).

11. A method of providing a roof comprising a heat exchange system, the method comprising:
a) fixing a construction (7) as claimed in claim 1 with respect to the tile batten (4a) of the roof,
b) mounting a conduit (8) to the construction (7), and
c) placing a roof tile (1b) on the roof on a position cooperating with the construction (7) for deforming the elastic portion (72; 721) by a weight of the roof tile (1b) **characterized in that** the construction (7) comprises a first part (710, 711) being constructed for being attachable to the tile batten (4a), for holding the conduit (8), and for holding a second part (72) being at least partly resilient and, in use, extending between the roof tile (1b) and the conduit (8) to obtain the press fit contact for transferring the heat between the roof tile (1b) and the conduit (8), wherein the method comprises the additional step of
d) attaching the second part (72) to the first part (711, 712), and wherein the steps are performed in the order a), b), d) and c).

12. A method of upgrading an existing roof comprising:
removing existing roof tiles (1b), and
performing the steps of the method according to claim 11, wherein the roof tile X (1b) of step c) is the existing roof tile or a new roof tile.

## Patentansprüche

1. Eine Konstruktion (7) zum Fixieren eines Rohres (8) in Bezug auf eine Dachlatte (4a; 4b) und zum Herstellen eines thermischen Kontakts zwischen dem Rohr (8) und einem Dachziegel (1b) für einen Wärmeaustausch zwischen dem Dachziegel (1b) und einem Fluid im Rohr (8), wobei die Konstruktion (7) einen elastischen Abschnitt (72; 721) aufweist, um einen Presspassungskontakt zwischen dem Rohr (8) und dem Dachziegel (1b) zu erhalten, wenn der Dachziegel (1b) eingehängt wird, **dadurch gekennzeichnet, dass**:
die Konstruktion (7) geformt ist, um eine Befestigung zum Anordnen des Rohres (8) in einem Bereich zwischen aufeinander folgenden Dachlatten (4a, 4b) zu bilden, und
der elastische Abschnitt (72; 721) der Konstruktion (7) durch ein Gewicht des Dachziegels (1b) verformbar ist, wenn dieser eingehängt wird, um den Presspassungskontakt zu erhalten.

2. Eine Konstruktion (7) nach Anspruch 1, die auf der Dachlatte (4a) befestigt und geformt ist, um das Rohr (8) an seinem unteren Teil zu halten, der eine Seite des Rohres (8) ist, die vom Dachziegel (1b) abgewandt ist, und an einer Seite, die der Dachlatte (4a) zugewandt ist, an der die Konstruktion (7) in Gebrauch befestigt ist, um, in Gebrauch, eine Bewegung des Rohres (8) in Richtung Dachlatte (4a) und weg vom Dachziegel (1b) zu verhindern.

3. Eine Konstruktion (7) nach Anspruch 1, wobei der elastische Abschnitt (72; 721) ein erstes Ende, um einen thermischen Kontakt mit dem Dachziegel (1b) in Gebrauch herzustellen, und ein zweites Ende zum Ausüben einer Kraft auf das Rohr (8), wenn vorhanden, aufweist, wodurch ein thermischer Kontakt mit dem Rohr (8) hergestellt wird, wobei der Kraft durch eine Form der Konstruktion (7) entgegengewirkt wird, die eine Bewegung des Rohres (8) in Richtung Dachlatte (4a) und weg vom Dachziegel (1b) verhindert.

4. Eine Konstruktion (7) nach Anspruch 1, wobei die Konstruktion (7) einen Abschnitt (710) aufweist, der sich in Gebrauch auf eine Oberseite der Dachlatte (4a) erstreckt, um die Konstruktion (7) auf der Dachlatte (4a) zu befestigen, wobei die Oberseite der Dachlatte (4a) die Seite der Dachlatte (4a) ist, die dem Dachziegel (1b), wenn vorhanden, zugewandt ist.

5. Eine Konstruktion nach Anspruch 1, umfassend einen ersten Teil (710, 711), der konstruiert ist, um in Bezug auf die Dachlatte (4a) fixiert zu werden, um das Rohr (8) zu halten und um einen zweiten Teil (72) zu halten, der wenigstens teilweise federnd ist und sich in Gebrauch zwischen dem Dachziegel (1b) und dem Rohr (8) erstreckt, um den Presspassungskontakt zum Übertragen der Wärme zwischen dem Dachziegel (1b) und dem Rohr (8) zu erhalten.

6. Eine Konstruktion nach Anspruch 6, wobei der erste Teil (710, 711) eine geringere Wärmeleitfähigkeit aufweist als der zweite Teil (72).

7. Eine Konstruktion nach Anspruch 6, wobei der zweite Teil (72) geformt ist, um den Dachziegel (1b) in seinem Mittelbereich zu berühren.

8. Eine Konstruktion nach einem der Ansprüche 1 bis 7, ferner umfassend das Rohr (8).

9. Eine Konstruktion nach einem der Ansprüche 1 bis 7, ferner umfassend einen Dachziegel (1b) mit einem wärmeleitfähigen Blech, einer wärmeleitfähigen Lage oder Beschichtung (2) an seiner Seite, die der Dachlatte (4a) zugewandt ist, wenn er befestigt ist.

10. Ein Dachziegel-Wärmetauschsystem, umfassend:
eine Dachlatte (4a),
ein Rohr (8),
einen Dachziegel (1b) und
eine Konstruktion (7) nach Anspruch 1, die in Bezug auf die Dachlatte (4a) fixiert wird, um einen Presspassungskontakt zwischen dem Rohr (8) und dem Dachziegel (1b) herzustellen.

11. Ein Verfahren zum Bereitstellen eines Daches, umfassend ein Wärmetauschsystem, wobei das Verfahren Folgendes umfasst:
a) Fixieren einer Konstruktion (7) nach Anspruch 1 in Bezug auf die Dachlatte (4a) des Daches,
b) Befestigen eines Rohres (8) an der Konstruktion (7) und
c) Anordnen eines Dachziegels (1b) auf dem Dach an einer Position, die mit der Konstruktion (7) zusammenwirkt, um den elastischen Abschnitt (72; 721) durch ein Gewicht des Dachziegels (1b) zu verformen, **dadurch gekennzeichnet, dass** die Konstruktion (7) einen ersten Teil (710, 711) umfasst, der konstruiert ist, um an der Dachlatte (4a) anbringbar zu sein, um das Rohr (8) zu halten und um einen zweiten Teil (72) zu halten, der wenigstens teilweise federnd ist und sich in Gebrauch zwischen dem Dachziegel (1b) und dem Rohr (8) erstreckt, um den Presspassungskontakt zum Übertragen der Wärme zwischen dem Dachziegel (1b) und dem Rohr (8) zu erhalten, wobei das Verfahren den zusätzlichen Schritt des
d) Befestigens des zweiten Teils (72) am ersten Teil (711, 712) umfasst, und wobei die Schritte in der Reihenfolge a), b), d) und c) ausgeführt werden.

12. Ein Verfahren zum Aufrüsten eines bestehenden Daches, umfassend:
Entfernen der bestehenden Dachziegel (1b) und
Ausführen der Schritte des Verfahrens nach Anspruch 11, wobei der Dachziegel (1b) von Schritt c) der bestehende Dachziegel oder ein neuer Dachziegel ist.

## Revendications

1. Une construction (7) pour fixer un conduit (8) par rapport à un liteau de support de tuile (4a, 4b) et pour fournir un contact thermique entre le conduit (8) et une tuile (1b) pour assurer un échange de chaleur entre la tuile (1b) et un fluide dans le conduit (8), la construction (7) ayant une partie élastique (72 ; 721) pour obtenir un contact étroit entre le conduit (8) et la tuile (1b) lorsque la tuile (1b) est installée, **caractérisée en ce que** :
la construction (7) est formée pour établir un support pour positionner le conduit (8) dans une zone entre les liteaux de support de tuile (4a, 4b), et
la partie élastique (72 ; 721) de la construction (7) est déformable par un poids de la tuile (1b) lorsqu'elle est installée de sorte à obtenir ledit contact étroit.

2. Une construction (7) selon la revendication 1, montée sur le liteau de support de tuile (4a) et formée pour maintenir le conduit (8) sur sa partie inférieure qui est un côté du conduit (8) dirigé à l'écart de la tuile (1b) et sur un côté dirigé vers le liteau de support de tuile (4a) sur lequel est montée la construction (7) en utilisation, pour empêcher, en utilisation, le mouvement du conduit (8) dans la direction allant vers le liteau de support de tuile (4a) et s'écartant de la tuile (1b).

3. Une construction (7) selon la revendication 1, dans laquelle la partie élastique (72 ; 721) a une première extrémité établissant un contact thermique avec la tuile (1b) en utilisation et une seconde extrémité pour exercer une force sur le conduit (8) lorsqu'il est présent, fournissant ainsi un contact thermique avec le conduit (8), la force étant contrée par une forme de la construction (7) empêchant le mouvement du conduit (8) dans la direction allant vers le liteau de support de tuile (4a) et s'écartant de la tuile (1b).

4. Une construction (7) selon la revendication 1, la construction (7) ayant une partie (710) s'étendant, en utilisation, vers une partie supérieure du liteau de support de tuile (4a) pour monter la construction (7) sur le liteau de support de tuile (4a), la partie supérieure du liteau de support de tuile (4a) étant le côté du liteau de support de tuile (4a) dirigé vers la tuile (1b) lorsqu'elle est présente.

5. Une construction selon la revendication 1, comprenant une première partie (710, 711) construite pour être fixée par rapport au liteau de support de tuile (4a), pour maintenir le conduit (8), et pour maintenir une seconde partie (72) étant au moins partiellement élastique et s'étendant, en utilisation, entre la tuile (1b) et le conduit (8) pour obtenir le contact étroit permettant de transférer la chaleur entre la tuile (1b) et le conduit (8).

6. Une construction selon la revendication 6, dans laquelle la première partie (710, 711) présente une conductivité thermique inférieure à celle de la seconde partie (72).

7. Une construction selon la revendication 6, dans laquelle la seconde partie (72) est formée pour entrer en contact avec la tuile (1b) dans sa zone centrale.

8. Une construction selon l'une quelconque des revendications 1 à 7, comprenant en outre le conduit (8).

9. Une construction selon l'une quelconque des revendications 1 à 7, comprenant en outre une tuile (1b) ayant une feuille, une couche ou un revêtement thermoconducteur (2) sur son côté dirigé vers le liteau de support de tuile (4a) lorsqu'il est monté.

10. Un système d'échange thermique de tuile comprenant :
un liteau de support de tuile (4a),
un conduit (8),
une tuile (1b), et
une construction (7) selon la revendication 1 fixée par rapport au liteau de support de tuile (4a) pour fournir un contact étroit entre le conduit (8) et la tuile (1b).

11. Un procédé de fourniture d'un toit comprenant un système d'échange thermique, le procédé comprenant :
a) la fixation d'une construction (7) selon la revendication 1 par rapport au liteau de support de tuile (4a) du toit,
b) le montage d'un conduit (8) sur la construction (7), et
c) la mise en place d'une tuile (1b) sur le toit à une position en coopération avec la construction (7) pour déformer la partie élastique (72 ; 721) sous un poids de la tuile (1b),
**caractérisé en ce que** la construction (7) comprend une première partie (710, 711) construite pour pouvoir se fixer au liteau de support de tuile (4a), pour maintenir le conduit (8) et pour maintenir une seconde partie (72) étant au moins partiellement élastique et s'étendant, en utilisation, entre la tuile (1b) et le conduit (8) pour obtenir le contact étroit permettant de transférer la chaleur entre la tuile (1b) et le conduit (8), le procédé comprenant en outre l'étape suivante :
d) la fixation de la seconde partie (72) à la première partie (711, 712), et dans lequel les étapes sont effectuées dans l'ordre a), b), c) et d).

12. Un procédé d'amélioration d'une toiture existante comprenant :
le retrait des tuiles (1b) existantes, et
la réalisation des étapes du procédé selon la revendication 11, dans lequel la tuile (1b) de l'étape c) est la tuile existante ou une nouvelle tuile.
